Europäisches Patentamt

European Patent Office

Office européen des brevets

(19)

(11) Numéro de publication : **0 359 665 B1**

(12) **FASCICULE DE BREVET EUROPEEN**

(45) Date de publication du fascicule du brevet :
09.12.92 Bulletin 92/50

(51) Int. Cl.⁵ : **G01F 15/18,** G01F 15/00,
F16L 23/04

(21) Numéro de dépôt : **89402503.0**

(22) Date de dépôt : **13.09.89**

(54) **Dispositif pour fixer un compteur d'eau sur une embase et procédé s'y rapportant.**

(30) Priorité : **16.09.88 FR 8812095**

(43) Date de publication de la demande :
**21.03.90 Bulletin 90/12**

(45) Mention de la délivrance du brevet :
**09.12.92 Bulletin 92/50**

(84) Etats contractants désignés :
**BE DE ES GB GR IT LU NL**

(56) Documents cités :
**DE-A- 2 305 743**
**FR-A- 360 241**
**FR-A- 1 217 490**
**GB-A- 2 086 514**

(73) Titulaire : **MANUFACTURE D'APPAREILLAGE**
**ELECTRIQUE DE CAHORS**
**B.P.149 Regourd**
**F-46003 Cahors Cédex (FR)**

Titulaire : **LYONNAISE DES EAUX**
**52 rue de Lisbonne**
**F-75008 Paris (FR)**
Titulaire : **PERSOHN S.A.**
**Le Rey**
**F-33430 Bazas (FR)**

(72) Inventeur : **Rappart, Alain**
**Camp del Roc**
**F-46230 Lalbenque (FR)**
Inventeur : **Loosdregt, Henri**
**44 rue de Lisbonne**
**F-75008 Paris (FR)**
Inventeur : **Persohn, Paul**
**"Les Cigales" Prechac**
**F-33730 Villandraut (FR)**
Inventeur : **Persohn, Philippe**
**14 bis Cours Gambetta**
**F-33430 Bazas (FR)**

(74) Mandataire : **Bouju, André**
**Cabinet Bouju Derambure (Bugnion) S.A. B.P.**
**6250**
**F-75818 Paris Cédex 17 (FR)**

**Description**

La présente invention concerne un dispositif pour fixer un compteur d'eau sur l'embase d'un support de compteur comportant un conduit d'arrivée d'eau et un conduit de départ d'eau.

L'invention vise particulièrement un dispositif pour fixer un compteur d'eau sur une embase rotative tel que décrit dans EP-A-0 287 407 (publié le 19.10.88.)

L'invention vise également le procédé de montage et de démontage du dispositif précité.

Le but de la présente invention est de créer un dispositif qui permet d'assembler facilement le compteur et l'embase et qui soit inviolable.

Suivant l'invention, ce dispositif comporte des surfaces de contact entre le compteur d'eau et l'embase bordées chacune par un rebord annulaire formant, lorsqu'ils sont en contact une saillie annulaire, une bague d'assemblage engagée autour du compteur et de l'embase prévue pour maintenir les deux rebords annulaires en contact l'un avec l'autre, cette bague comprenant des fentes s'étendant sur une partie de sa longueur et séparant les uns des autres une série de doigts élastiques répartis autour de la bague, cette bague comprenant en outre sur sa face interne une gorge annulaire complémentaire des deux rebords annulaires en contact l'un avec l'autre, cette gorge étant ménagée dans la partie de la bague présentant les doigts élastiques, l'extrémité de cette partie de la bague comportant des ergots en saillie vers l'extérieur le dispositif comportant de plus un anneau rigide enfilé de force sur la partie de la bague présentant les doigts élastiques et en appui sur les ergots qui maintient la gorge annulaire ménagée sur la face interne de ces doigts en appui sur les rebords annulaires en contact du compteur et de l'embase.

Grâce à leur élasticité, les doigts de la bague peuvent fléchir vers l'extérieur lors du montage de cette bague sur le compteur, de sorte que la gorge annulaire ménagée sur la face interne de ces doigts peut venir s'encliqueter sur les rebords en contact du compteur et de l'embase, de sorte que ceux-ci sont plaqués l'un contre l'autre.

L'anneau rigide enfilé sur ces doigts maintient la gorge annulaire en appui sur les deux rebords, de sorte que la bague ne peut pratiquement plus être démontée autrement qu'en cassant les doigts.

Selon une réalisation avantageuse de l'invention, la bague d'assemblage comporte dans sa partie non fendue opposée aux ergots une zone filetée sur laquelle peut se visser un manchon de montage de l'anneau et permettant de pousser celui-ci vers les ergots.

Ce manchon facilite le montage de l'anneau sur la bague.

Selon une version préférée de l'invention, l'anneau comporte sur sa face interne des saillies élastiques pouvant lors du montage de l'anneau s'encliqueter élastiquement dans un creux ménagé sur la surface extérieure de la bague.

Ainsi, l'anneau est verrouillé axialement dans les deux sens d'une part par les ergots et d'autre part par les saillies élastiques encliquetées dans le creux de la bague. De ce fait l'anneau ne peut pas être retiré.

Selon une particularité avantageuse de l'invention, la bague comporte au niveau de sa gorge annulaire une zone d'épaisseur réduite définissant une ligne de rupture des doigts élastiques lorsque l'anneau est forcé sur les ergots de ces doigts au-delà d'une force prédéterminée.

Ainsi pour démonter le compteur, il suffit de pousser sur l'anneau en forçant le vissage du manchon jusqu'à ce que les doigts cassent au niveau de la zone de rupture. Le fait que le compteur ne puisse pas être démonté autrement qu'en cassant les doigts de la bague assure une complète inviolabilité de l'assemblage du compteur sur l'embase.

Selon un autre aspect de l'invention selon la revendication 11, le procédé pour fixer le compteur d'eau sur l'embase rotative est caractérisé par les étapes suivantes :

- on pose le compteur sur l'embase de façon que leurs rebords annulaires soient en contact,

- on engage sur le compteur, la bague d'assemblage et en faisant fléchir vers l'extérieur les doigts élastiques de celle-ci, on coiffe les deux rebords annulaires en contact par la gorge annulaire ménagée sur la face interne des doigts,

- on enfile sur la bague l'anneau jusqu'à ce que le bord de celui-ci repose sur certaines ergots ménagés aux extrémités des doigts de la bague.

Pour démonter la bague d'assemblage, on force le vissage du manchon vers l'anneau jusqu'à ce que la force d'appui de son bord sur les ergots entraîne la rupture du doigt suivant la zone d'épaisseur réduite ménagée au niveau de la gorge annulaire qui coiffe les rebords du compteur et de l'embase.

D'autres particularités et avantages de l'invention apparaîtront encore dans la description ci-après.

Aux dessins annexés donnés à titre d'exemples non limitatifs :

- la figure 1 est une vue en élévation d'un compteur d'eau en position sur une embase, et assemblé au moyen d'un dispositif conforme à l'invention représenté en coupe suivant un plan axial,

- la figure 2 est une vue en coupe de la bague d'assemblage suivant le plan II-II de la figure 1,

- la figure 3 est une vue en coupe par un plan axial de l'anneau de fixation de la bague,

- la figure 4 est une vue de dessus de l'anneau,

- la figure 5 est une vue en élévation du compteur, de l'embase et de la bague montée sur ceux-ci et une vue en coupe longitudinale du manchon de montage vissé sur la bague et en appui sur l'anneau également en coupe.

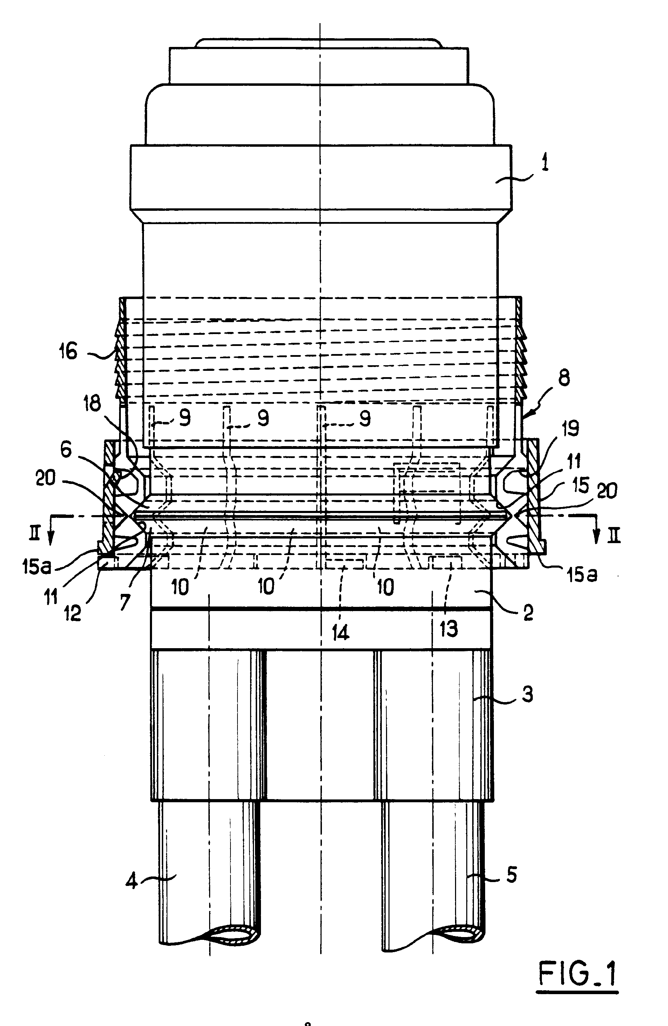

Dans la réalisation de la figure 1, on a représenté un compteur d'eau 1 fixé sur l'embase rotative 2 d'un support de compteur 3 comportant un conduit 4 d'arrivée d'eau et un conduit 5 de départ d'eau. La rotation du compteur 1 et de l'embase 2 sur le support 3 permet d'ouvrir et de fermer le passage de l'eau. Un tel mode de réalisation a été décrit dans la demande de brevet français 87 03453 du 13 mars 1987 aux noms des demanderesses.

Les surfaces de contact entre le compteur d'eau 1 et l'embase 2 sont bordées chacune par un rebord annulaire 6, 7 formant lorsqu'ils sont en contact une saillie annulaire de section en V.

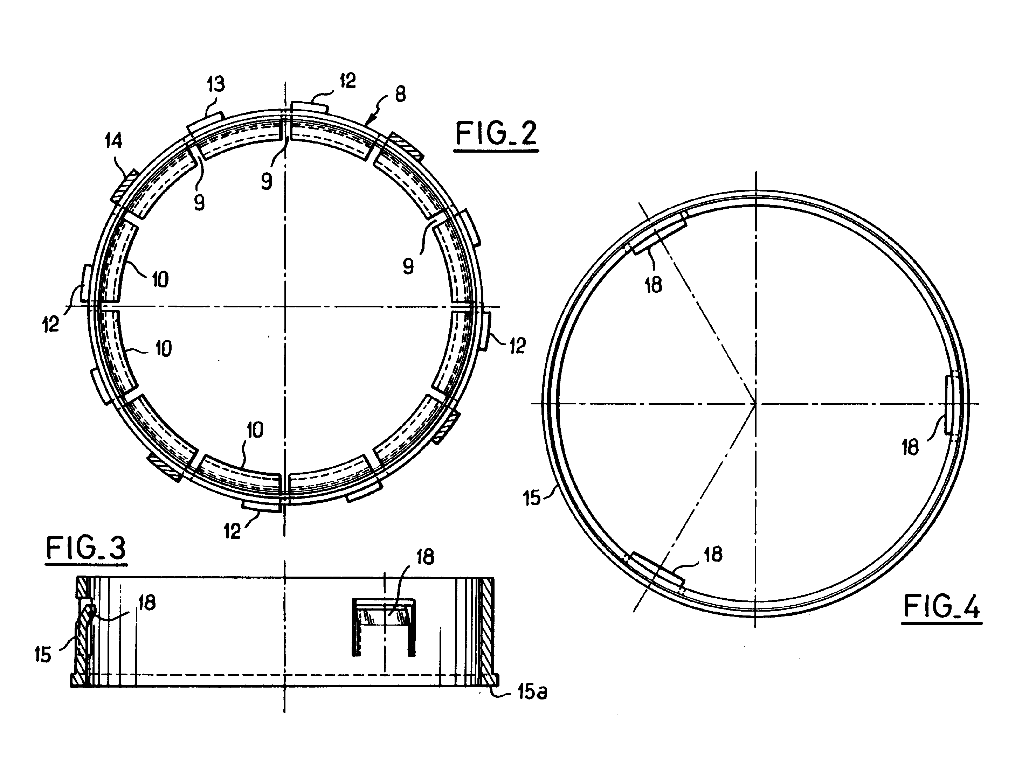

Ces rebords 6, 7 forment chacun un angle de 45° avec la surface de contact entre le compteur 1 et l'embase 2. Une bague d'assemblage 8 engagée autour du compteur 1 et de l'embase 2 est prévue pour maintenir les deux rebords annulaires 6, 7 en contact l'un avec l'autre. Cette bague 8 comprend des fentes 9 s'étendant sur une partie de sa longueur et séparant les uns des autres une série de doigts élastiques 10 répartis autour de la bague 8. La bague 8 comprend en outre sur sa face interne une gorge annulaire 11 complémentaire des deux rebords annulaires 6, 7 en contact l'un avec l'autre. Cette gorge 11 est ménagée dans la partie de la bague 8 présentant les doigts élastiques 10. L'extrémité de cette partie de la bague comporte des ergots 12, 13, 14 (voir également figure 2) en saillie vers l'extérieur. Un anneau rigide 15 enfilé de force sur la partie de la bague 8 présentant les doigts élastiques 10 et en appui sur les ergots 12 maintient la gorge annulaire 11 ménagée sur la face interne de ces doigts 10 en appui sur les rebords annulaires 6, 7 en contact du compteur 1 et de l'embase 2.

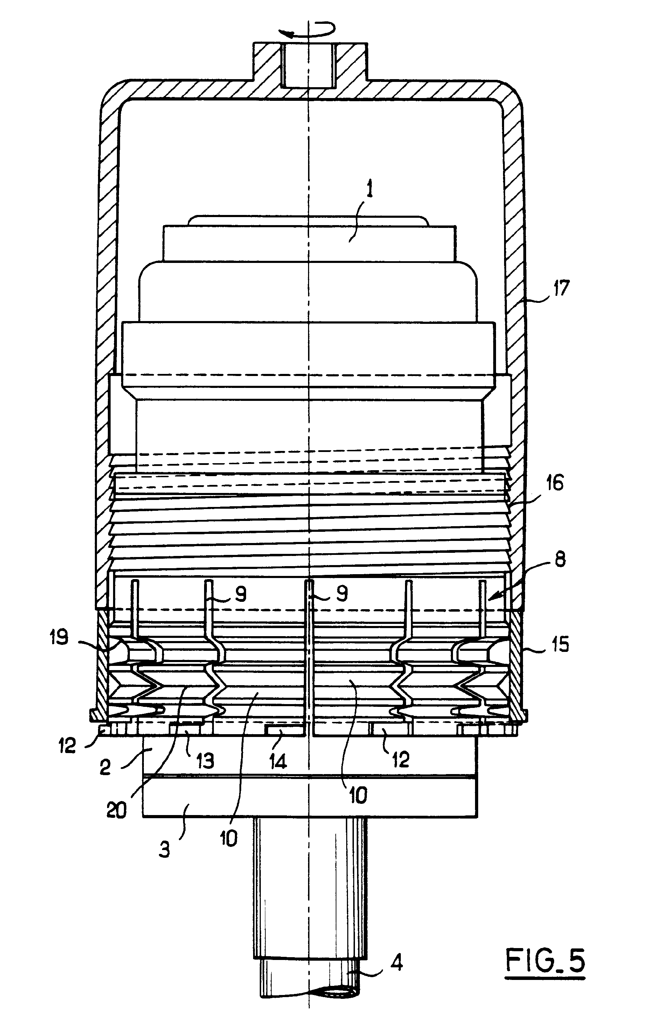

Par ailleurs, la bague d'assemblage 8 comporte dans sa partie non fendue opposée aux ergots 12, 13, 14 une zone filetée 16 sur laquelle peut se visser un manchon de montage 17 de l'anneau 15 (voir figure 5) et permettant de pousser celui-ce contre les ergots.

L'anneau 15 comporte sur sa face interne des saillies élastiques 18 en forme de languettes (voir figure 3) pouvant lors du montage de l'anneau 15 s'encliqueter élastiquement dans un creux annulaire 19 ménagé sur la surface extérieure de la bague 8.

La bague 8 comporte au niveau de sa gorge annulaire 11 une zone d'épaisseur réduite 20 définissant une ligne de rupture des doigts élastiques 10 lorsque l'anneau 15 est forcé sur les ergots 12, 13, 14 de ces doigts 10 au-delà d'une force prédéterminée. Dans l'exemple représenté, chaque doigt élastique 10 porte un ergot 12, 13 ou 14.

Comme indiqué sur la figure 1, lorsque l'anneau 15 est en position normale d'assemblage, son bord 15a repose seulement sur certains ergots 12, tandis que d'autres ergots 13, 14 légèrement espacés du bord 15a de l'anneau 15.

Dans l'exemple représenté (voir figure 2), la bague 8 comporte douze doigts élastiques 10 régulièrement répartis autour de la bague 8.

Lorsque l'anneau 15 est en position normale d'assemblage, son bord 15a repose sur quatre ergots 12 disposés à 90° les uns des autres. Entre ces ergots 12 sont disposés deux ergots 13, 14 espacés du bord 15a de l'anneau 15, l'un 14 étant plus espacé que l'autre 13. L'ergot 13 est par exemple à 0,5 mm du bord 15a et l'autre 14 à 1 mm de ce bord.

L'ergot 14 le plus espacé est celui situé en avance par rapport à l'autre 13 relativement au sens du vissage du manchon 17.

On voit d'autre part, sur la figure 2, que les ergots 12, 13, 14 sont situés près des fentes 9 qui séparent les doigts élastiques 10.

On va maintenant décrire le procédé pour fixer le compteur d'eau 1 sur l'embase rotative 2 du support 3 au moyen du dispositif de fixation précité. Ce procédé comprend les étapes suivantes :

- on pose le compteur 1 sur l'embase 2 de façon que leurs rebords annulaires 6, 7 soient en contact,
- on engage sur le compteur 1, la bague d'assemblage 8 et en faisant fléchir vers l'extérieur les doigts élastiques 10 de celle-ci, on coiffe les deux rebords annulaires 6, 7 en contact par la gorge annulaire 11 ménagée sur la face interne des doigts 10,
- on enfile sur la bague 8, l'anneau 15 jusqu'à ce que le bord 15a de celui-ci repose sur les ergots 12 ménagés aux extrémités des doigts 10 de la bague 8.

Selon une version préférée de l'invention, on met en oeuvre le manchon 17. A cet effet, on visse le manchon 17 sur la partie filetée 16 de la bague 8 pour pousser l'anneau 15 vers les ergots 12, 13, 14 jusqu'à ce que les saillies élastiques 18 de cet anneau 15 viennent s'encliqueter dans le creux annulaire 19 de la bague 8.

Pour démonter la bague d'assemblage 8, on force le vissage du manchon 17 vers l'anneau 15 jusqu'à ce que la force d'appui de son bord 15a sur les ergots 12, puis 13, puis 14 engendre la rupture des doigts 10 suivant la zone d'épaisseur réduite 20 ménagée au niveau de la gorge annulaire 11 qui coiffe les rebords 6, 7 du compteur 1 et de l'embase 2.

Etant donné que les ergots 12, 13 et 14 sont situés à des distances différentes et progressivement croissantes du bord 15a de l'anneau 15 et que les ergots sont situés près des fentes 9 et non pas au milieu des doigts 10, la rupture de ceux-ci a lieu progressivement en trois étapes successives, ce qui permet de limiter le couple de serrage du manchon 17 a une valeur modérée, pour obtenir la rupture des doigts 10.

Bien entendu, le choix du matériau constituant la bague 8 devra être compatible avec l'obtention du résultat précité. Celui-ci devra en effet être à la fois élastique et cassant.

L'acier présente ces propriétés, ainsi que des matériaux synthétiques choisis pour leur haute propriété de tenue en traction et un allongement à la rupture faible.

Une fois les doigts 10 cassés, la bague 8 et l'anneau 15 peuvent être retirés. Le compteur 1 peut alors être enlevé de l'embase 2.

Le principal avantage du dispositif de fixation que l'on vient de décrire est qu'il est inviolable. En effet, pour démonter le compteur 1, il est nécessaire de réaliser la rupture des doigts 10. Ainsi, l'utilisateur non autorisé ne pourra pas démonter le compteur lui-même par exemple pour modifier frauduleusement la consommation affichée sur ce compteur.

Bien entendu, l'invention n'est pas limitée à l'exemple de réalisation que l'on vient de décrire et on peut apporter à celui-ci de nombreuses modifications sans sortir du cadre de l'invention.

## Revendications

1. Dispositif pour fixer un compteur d'eau (1) sur l'embase (2) d'un support (3) de compteur comportant un conduit d'arrivée d'eau (4) et un conduit de départ d'eau (5), des surfaces de contact entre le compteur d'eau (1) et l'embase (2) bordées chacune par un rebord annulaire (6, 7) formant lorsqu'ils sont en contact une saillie annulaire, une bague d'assemblage (8) engagée autour du compteur et de l'embase est pour maintenir les deux rebords annulaires (6, 7) en contact l'un avec l'autre, cette bague (8) comprenant des fentes (9), s'étendant sur une partie de sa longueur et séparant les uns des autres une série de doigts élastiques (10), répartis autour de la bague, cette bague (8) comprenant en outre sur sa face interne une gorge annulaire (11) complémentaire des deux rebords annulaires (6, 7) en contact l'un avec l'autre, cette gorge (11) étant ménagée dans la partie de la bague présentant les doigts élastiques (10), l'extrémité de cette partie de la bague comportant des ergots (12, 13, 14) en saillie vers l'extérieur, le dispositif comportant de plus un anneau rigide (15) enfilé de force sur la partie de la bague présentant les doigts élastiques (10) et en appui sur les ergots (12) qui maintient la gorge annulaire (11) ménagée sur la face interne de ces doigts (10) en appui sur les rebords annulaires (6, 7) en contact du compteur (1) et de l'embase (2).

2. Dispositif conforme à la revendication 1, caractérisé en ce que la bague d'assemblage (8) comporte dans sa partie non fendue opposée aux ergots (12, 13, 14) une zone filetée (16), sur laquelle peut se visser un manchon de montage (17) de l'anneau (15), et permettant de pousser celui-ci vers les ergots (12, 13, 14).

3. Dispositif conforme à l'une des revendications 1 ou 2, caractérisé en ce que l'anneau (15) comporte sur sa face interne des saillies élastiques (18) pouvant lors du montage de l'anneau (15) s'encliqueter élastiquement dans un creux (19) ménagé sur la surface extérieure de la bague (8).

4. Dispositif conforme à l'une des revendications 1 à 3, caractérisé en ce que la bague (8) comporte au niveau de sa gorge annulaire (11) une zone d'épaisseur réduite (20) définissant une ligne de rupture des doigts élastiques (10) lorsque l'anneau (15) est forcé sur les ergots (12, 13, 14) de ces doigts au-delà d'une force prédéterminée.

5. Dispositif conforme à l'une des revendications 1 à 4, caractérisé en ce que chaque doigt élastique (10) porte un ergot (12, 13 ou 14).

6. Dispositif conforme à la revendication 5, caractérisé en ce que lorsque l'anneau (15) est en position normale d'assemblage, son bord (15a) repose seulement sur certains ergots (12) tandis que d'autres ergots (13, 14) sont légèrement espacés du bord (15a) de l'anneau.

7. Dispositif conforme à l'une des revendications 1 à 6, caractérisé en ce que la bague (8) comporte douze doigts élastiques (10) régulièrement répartis autour de la bague.

8. Dispositif conforme à l'une des revendications 6 ou 7, caractérisé en ce que lorsque l'anneau (15) est en position normale d'assemblage son bord repose sur quatre ergots (12) disposés à 90° les uns des autres et en ce qu'entre ces ergots (12) sont disposés deux ergots (13, 14) espacés du bord (15a) de l'anneau, l'un (14) étant plus espacé que l'autre (13).

9. Dispositif conforme à la revendication 8, caractérisé en ce que l'ergot le plus espacé (14) est celui situé en avance par rapport à l'autre (13) relativement au sens du vissage.

10. Dispositif conforme à l'une des revendications 1 à 9, caractérisé en ce que les ergots (12, 13, 14) sont situés près des fentes (9) qui séparent les doigts élastiques (10).

11. Procédé pour fixer un compteur d'eau (1) sur l'embase rotative (2) d'un support, au moyen d'un dispositif conforme à l'une des revendications 1 à 10, caractérisé par les étapes suivantes :
      - on pose le compteur (1) sur l'embase (2) de façon que leurs rebords annulaires (6, 7) soient en contact,
- on engage sur le compteur (1), la bague d'assemblage (8) et en faisant fléchir vers l'extérieur les doigts élastiques (10) de celle-ci, on coiffe les deux rebords annulaires (6, 7) en contact par la gorge annulaire (11), ménagée sur la face interne des doigts (10),
- on enfile sur la bague (8) l'anneau (15) jusqu'à ce que le bord (15a) de celui-ci repose sur certains ergots (12) ménagés aux extrémités des doigts (10) de la bague.

12. Procédé conforme à la revendication 11, dans lequel on met en oeuvre le manchon (17) conforme à la revendication 2 et l'anneau (15) conforme à la revendication 3, caractérisé en ce qu'on visse le manchon (17) sur la partie filetée (16) de la bague (8) pour pousser l'anneau (15) vers les ergots (12, 13, 14) jusqu'à ce que les saillies élastiques (18) de cet anneau viennent s'encliqueter dans le creux (19) de la bague (8).

13. Procédé conforme à la revendication 11, dans lequel on met en oeuvre une bague (8) conforme à l'une des revendications 4 à 10, caractérisé en ce que pour démonter la bague d'assemblage (8), on force le vissage du manchon (17) vers l'anneau (15) jusqu'à ce que la force d'appui de son bord (15a) sur les ergots (12, 13, 14) entraîne la rupture des doigts (10) suivant la zone d'épaisseur réduite (20) ménagée au niveau de la gorge annulaire (11) qui coiffe les rebords (6, 7) du compteur et de l'embase.

**Claims**

1. A device for fixing a water meter (1) onto the base (2) of a meter support (3) comprising a water inlet duct (4) and a water outlet duct (5), contact surfaces of the water meter (1) and the base (2) each bordered by an annular shoulder (6, 7) forming, when they are in contact, an annular projection, an assembly ring (8) engaged around the meter and the base in order to keep the two annular shoulders (6, 7) in contact with each other, this ring (8) comprising slits (9) extending over a part of its length and separating from each other a series of elastic fingers (10) distributed around the ring, this ring (8) comprising moreover on its inner face an annular groove (11) complementing the two annular shoulders (6, 7) in contact with each other, this groove (11) being formed in the part of the ring having the elastic fingers (10), the end of this part of the ring comprising lugs (12, 13, 14) projecting outwards, the device also comprising a rigid collar (15) force-fitted onto the part of the ring having the elastic fingers (10) and bearing against the lugs (12) which keeps the annular groove (11) formed on the inner face of these fingers (10) against the annular shoulders (6, 7) of the meter (1) and the base (2) which are in contact .

2. A device according to claim 1, characterised in that the assembly ring (8) comprises in its non-slitted part opposite the lugs (12, 13, 14) a threaded zone (16) onto which can be screwed a sleeve (17) for fixing the collar (15) and enabling the latter to be pushed towards the lugs (12, 13, 14).

3. A device according to claim 1 or 2, characterised in that the collar (15) comprises on its inner face elastic projections (18) which, when the collar (15) is mounted, can click elastically into a hollow (19) formed on the outer surface of the ring (8).

4. A device according to any one of claims 1 to 3, characterised in that the ring (8) comprises in the region of its annular groove (11) a zone of reduced thickness (20) defining a line of breakage of the elastic fingers (10) when the collar (15) is pushed onto the lugs (12, 13, 14) of these fingers with a force exceeding a predetermined value.

5. A device according to any one of claims 1 to 4, characterised in that each elastic finger (10) carries a lug (12, 13 or 14).

6. A device according to claim 5, characterised in that when the collar (15) is in the normal assembly position, its edge (15a) rests only on certain lugs (12) while other lugs (13, 14) are slightly spaced from the edge (15a) of the collar.

7. A device according to any one of claims 1 to 6, characterised in that the ring (8) comprises twelve elastic fingers (10) regularly distributed around the ring.

8. A device according to claim 6 or 7, characterised in that when the ring (15) is in the normal assembly position its edge rests on four lugs (12) arranged at 90° relative to each other and in that between these lugs (12) there are arranged two lugs (13, 14) located at a distance from the edge (15a) of the collar, one (14) being further spaced than the other (13).

9. A device according to claim 8, characterised in that the furthest spaced lug (14) is the one situated further forward than the other (13) relative to the direction of screwing.

10. A device according to any one of claims 1 to 9, characterised in that the lugs (12, 13, 14) are situated close to the slits (9) which separate the elastic fingers (10).

11. A method for fixing a water meter (1) onto the rotating base (2) of a support, by means of a device according to any one of claims 1 to 10, characterised by the following stages:
   - the meter (1) is placed on the base (2) in such manner that their annular shoulders (6, 7) are in contact,
   - the assembly ring (8) is engaged onto the meter (1) and, by bending its elastic fingers (10) outwards, the two annular shoulders (6, 7) which are in contact are overlaid by the annular groove (11) formed on the inner face of the fingers (10),
   - the collar (15) is inserted over the ring (8) until its edge (15a) rests on certain lugs (12) formed at the ends of the fingers (10) of the ring (8).

12. The method according to claim 11, in which the sleeve (17) according to claim 2 and the collar (15) according to claim 3 are used, characterised in that the sleeve (17) is screwed onto the threaded part (16) of the ring (8) so as to push the collar (15) towards the lugs (12, 13, 14) until the elastic projections (18) of this collar click into the hollow (19) of the ring (8).

13. The method according to claim 11, in which a ring (8) according to any one of claims 4 to 10 is used, characterised in that in order to remove the assembly ring (8), the sleeve (17) is force-screwed towards the collar (15) until the force of its edge (15a) against the lugs (12, 13, 14) causes breakage of the fingers (10) along the zone of reduced thickness (20) formed in the region of the annular groove (11) which overlays the shoulders (6, 7) of the meter and the base.

## Patentansprüche

1. Vorrichtung zum Befestigen eines Wasserzählers (1) am Sokkel (2) eines Trägers (3) des Zählers, mit einer Wasserzulaufleitung (4) und einer Wasserablaufleitung (5), Verbindungsflächen des Wasserzählers (1) und des Sockels (2), die jeweils von einem ringförmigen Rand (6, 7) eingefaßt sind, der dann, wenn sie miteinander in Kontakt sind, einen ringförmigen Vorsprung bildet, einem Montagering (8), der den Zähler und den Sockel einfaßt, um die zwei ringförmigen Ränder (6, 7) miteinander in Kontakt zu halten, wobei der Montagering (8) Schlitze (9) aufweist, die sich über einen Teil seiner Länge erstrecken und eine Reihe von um den Ring verteilten, elastischen Fingern (10) voneinander trennen, und wobei der Montagering (8) außerdem an seiner Innenseite eine ringförmige Auskehlung (11) aufweist, die zu den zwei miteinander in Kontakt befindlichen ringförmigen Rändern (6, 7) komplementär ist, wobei die Auskehlung (11) in dem die elastischen Finger (10) aufweisenden Teil des Rings angeordnet ist und das Ende dieses Teils des Rings nach außen abstehende Vorsprünge (12, 13, 14) umfaßt, wobei die Vorrichtung ferner einen starren Reif (15) aufweist, der mit Preßsitz über den die elastischen Finger (10) aufweisenden Teil des Rings geschoben und an den Vorsprüngen (12) abgestützt ist, und der die an der Innenseite der Finger (10) angeordnete ringförmige Auskehlung (11) in Anlage an den miteinander in Kontakt stehenden ringförmigen Rändern (6, 7) des Zählers (1) und des Sockels (2) hält.

2. Vorrichtung gemäß Anspruch 1, dadurch gekennzeichnet, daß der Montagering (8) in seinem nicht geschlitzten und den Vorsprüngen (12, 13, 14) gegenüberliegenden Teil eine Gewindezone (16) aufweist, auf die eine Montagemuffe (17) des Reifs (15) geschraubt werden kann, so daß dieser gegen die Vorsprünge (12, 13, 14) gedrückt werden kann.

3. Vorrichtung gemäß einem der Ansprüche 1 oder 2, dadurch gekennzeichnet, daß der Reif (15) an seiner Innenseite elastische Vorsprünge (18) aufweist, die bei der Montage des Reifs (15) in eine an der Außenseite des Rings (8) angeordnete Vertiefung (19) einrasten können.

4. Vorrichtung gemäß einem der Ansprüche 1 bis 3, dadurch gekennzeichnet, daß der Ring (8) auf Höhe seiner ringförmigen Auskehlung (11) eine Zone mit verringerter Dicke (20) aufweist, die eine Linie definiert, an der die elastischen Finger (10) brechen, wenn der Reif (15) mit einer Kraft, die größer als eine vorgegebene Kraft ist, gegen die Vorsprünge (12, 13, 14) dieser Finger gezwungen wird.

5. Vorrichtung gemäß einem der Ansprüche 1 bis 4, dadurch gekennzeichnet, daß jeder elastische Finger (10) einen Vorsprung (12, 13, 14) trägt.

6. Vorrichtung gemäß Anspruch 5, dadurch gekennzeichnet, daß die Kante (15a) des Reifs (15) dann, wenn sich dieser in der normalen Montageposition befindet, nur auf bestimmten Vorsprüngen (12) ruht, während sich die anderen Vorsprünge (13, 14) in einem geringen Abstand von der Kante (15a) des Reifs befinden.

7. Vorrichtung gemäß einem der Ansprüche 1 bis 6, dadurch gekennzeichnet, daß der Ring (8) zwölf elastische Finger (10) aufweist, die um den Ring gleichmäßig verteilt sind.

8. Vorrichtung gemäß einem der Ansprüche 6 oder 7, dadurch gekennzeichnet, daß die Kante des Reifs (15) dann, wenn sich dieser in der normalen Montageposition befindet, auf vier Vorsprüngen (12) ruht, die jeweils in einem Winkel von 90° angeordnet sind, und daß zwischen diesen Vorsprüngen (12) zwei Vorsprünge (13, 14) angeordnet sind, die sich von der Kante (15a) des Reifs jeweils in einem Abstand befinden, wobei der Abstand des einen Vorsprungs (14) größer als der Abstand des anderen Vorsprungs (13) ist.

9. Vorrichtung gemäß Anspruch 8, dadurch gekennzeichnet, daß der mit dem größten Abstand angeordnete Vorsprung (14) derjenige ist, der im Schraubsinn vor dem anderen Vorsprung (13) angeordnet ist.

10. Vorrichtung gemäß einem der Ansprüche 1 bis 9, dadurch gekennzeichnet, daß die Vorsprünge (12, 13, 14) in der Nähe der Schlitze (9), die die elastischen Finger (10) trennen, angeordnet sind.

11. Verfahren zum Befestigen eines Wasserzählers (1) an einem drehbaren Sockel (2) eines Trägers mittels einer Vorrichtung gemäß einem der Ansprüche 1 bis 10, gekennzeichnet durch die folgenden Schritte:

Stellen des Zählers (1) auf den Sockel (2), derart, daß sich ihre ringförmigen Ränder (6, 7) in Kontakt befinden,

Einfassen des Zählers (1) mit dem Montagering (8) und Abdecken der mittels der an der Innenseite der Finger (10) angeordneten ringförmigen Auskehlung (11) in Kontakt befindlichen zwei ringförmigen Ränder (6, 7), indem die elastischen Finger (10) nach außen gebogen werden, und

Aufschieben des Reifs (15) auf den Ring (8), bis die Kante (15a) des Reifs (15) auf bestimmten Vorsprüngen (12), die an den Enden der Finger (10) des Rings angeordnet sind, aufruhen.

12. Verfahren gemäß Anspruch 11, in dem die Muffe (17) gemäß Anspruch 2 und der Reif (15) gemäß Anspruch 3 verwendet werden, dadurch gekennzeichnet, daß die Muffe (17) auf den mit einem Gewinde versehenen Teil (16) des Rings (8) geschraubt wird, um den Reif (15) gegen die Vorsprünge (12, 13, 14) zu drücken, bis die elastischen Vorsprünge (18) dieses Reifs in der Vertiefung (19) des Rings (8) einrasten.

13. Verfahren gemäß Anspruch 11, in dem ein Ring (8) gemäß einem der Ansprüche 4 bis 10 verwendet wird, dadurch gekennzeichnet, daß für die Demontage des Montagerings (8) die Verschraubung der Muffe (17) gegen den Reif (15) gezwungen wird, bis die Druckkraft seiner Kante (15a) auf die Vosprünge (12, 13, 14) das Brechen der Finger (10) entlang der auf Höhe der die Ränder (6, 7) des Zählers und des Sockels abdeckenden ringförmigen Auskehlung (11) angeordneten Zone mit verringerter Dichte (20) zur Folge hat.

FIG.1

FIG.2

FIG.3

FIG.4

EP 0 359 665 B1

FIG.5